# FASCICULE DE BREVET EUROPEEN

(11) **EP 1 163 036 B1**
(45) Date de publication et mention de la délivrance du brevet: **14.05.2003**
(21) Numéro de dépôt: 00903749.0
(22) Date de dépôt: 08.02.2000
(51) Int. Cl.: B01D 29/33, B01D 63/06, B01D 46/24

(54) **NAPPE D'ELEMENTS DE FILTRATION, SEPARATION OU REACTION, MODULE COMPRENANT UNE TELLE NAPPE ET PROCEDES DE FABRICATION D'UNE TELLE NAPPE ET D'UN TEL MODULE**
ELEMENTE-ANORDNUNG ZUR FILTRATION, TRENNUNG ODER REAKTION, MODUL MIT SOLCHER ANORDNUNG UND VERFAHREN ZUR HERSTELLUNG EINER SOLCHEN ANORDNUNG ODER EINES SOLCHEN MODULS
SHEET OF FILTERING, SEPARATING OR REACTING ELEMENTS, MODULE COMPRISING SAME AND METHODS FOR MAKING SUCH A SHEET AND SUCH A MODULE

(30) Priorité: 19.02.1999 FR 9902102
(43) Date de publication de la demande: 19.12.2001
(73) Titulaire: EXEKIA, 65460 Bazet (FR)
(72) Inventeur: SORIA, Raymond, F-65460 Bazet (FR); CHANAUD, Philippe, F-65000 Tarbes (FR)
(74) Mandataire: Cabinet Hirsch
(86) Numéro de dépôt international: FR0000290
(87) Numéro de publication internationale: WO00048704

(56) Documents cités:
- EP-A- 0 025 349
- EP-A- 0 253 620
- EP-A- 0 556 932
- WO-A-95/06510
- FR-A- 344 377
- US-A- 2 576 864

## Description

La présente invention a pour objet un nouveau type d'assemblage d'éléments mono ou multicanal. Cette invention s'applique à la filtration, la séparation ou la mise en contact de fluides liquides ou gazeux et par exemple la microfiltration, l'ultrafiltration, la nanofiltration, la pervaporation, l'osmose inverse, aux (bio)réacteurs à membrane, aux diffuseurs gazeux ou contacteurs liquide ou gaz/liquide ou gaz ou à la catalyse, ou aux piles à combustible.

On connaît déjà plusieurs types d'assemblage d'éléments (filtrants) mono ou multicanal.

Les éléments peuvent tout d'abord être disposés individuellement dans un carter et occupent alors des positions prédéfinis. L'élément est maintenu par deux points d'appuis qui sont localisés au niveau des extrémités de la pièce. Selon la longueur de l'élément mono ou multicanal, la distance entre ces deux points d'appuis peut être importante. L'inconvénient de ce système réside dans cette distance entre deux points d'appuis qui impose l'utilisation d'éléments qui présentent de fortes tenues mécaniques. Ce premier exemple est généralement utilisé pour les membranes céramiques mono ou multicanal ayant de bonne tenue mécanique.

Le document WO-A-95 06510 décrit un assemblage d'éléments de filtration dans lequel les éléments sont reliés entre eux par des liaisons inter-éléments. Les liaisons inter-éléments sont pratiquées sur toute la longueur des éléments. Chaque élément comprend un bouchon à une extrémité de sorte que le fluide soit contraint de circuler à travers les parois des éléments de filtration. Les éléments ont pour fonction soit d'entrée du fluide, soit de sortie du fluide.

Le document EP-A-0 025 349 décrit un assemblage de filtration dans lequel les éléments sont reliés entre eux par des liaisons inter-éléments. Les liaisons sont soit des o-rings, soit des spirales, soit des points de ciment. Le nombre d'éléments de filtration est de 3, 7, 19,... Le taux de ramification est croissant en fonction du nombre d'éléments. Lorsque le nombre d'éléments est de 7, le taux de ramification est de 3,4. Lorsque le nombre d'éléments est de 19, le taux de ramification est de 4,4.

Afin de réduire la distance entre les deux points d'appuis, une ou plusieurs entretoises peuvent être utilisées. Le but de ces entretoises est d'améliorer la résistance mécanique de l'ensemble des éléments. Ces entretoises sont alors placées perpendiculairement à la longueur des éléments. Ces entretoises présentent des trous qui servent à positionner les éléments et comme dans le cas précédent, chaque élément occupe une position bien définie. L'utilisation d'entretoises permet d'améliorer la résistance mécanique mais présente d'énormes inconvénients qui sont liés aux positions prédéfinies des éléments dans l'assemblage. Tout d'abord, tout écart de rectitude dans la longueur des éléments s'avère être un problème au niveau de chaque entretoise. Ensuite, il existe des problèmes de mise en oeuvre industrielle. En effet, l'assemblage d'un grand nombre d'éléments s'avère fastidieux puisqu'il s'agit de glisser un à un les éléments au travers des différents trous des entretoises. Par ailleurs, l'assemblage un à un des éléments filtrants est difficile avec des éléments filtrants fragiles. Les seuls modules de filtration connus à ce jour avec des entretoises sont des modules avec des membranes de carbone, qui ont été renforcées avec des fibres disposées sur l'extérieur de ces membranes. Avec des éléments filtrants fragiles, il est impossible d'insérer de façon pratique un grand nombre d'éléments dans une entretoise. Un autre inconvénient de ce système d'assemblage provient de la barrière créée par ces entretoises qui perturbe l'écoulement du fluide traité ou à traité.

Dans une variante appliquée généralement aux fibres organiques, les éléments peuvent être disposés en fagot. Ces éléments sont alors joints à leurs extrémités par un empotage. Ce fagot représente une cartouche qui est ensuite positionnée dans le carter. Contrairement aux cas précédents, les éléments n'ont pas de position bien définie, mais l'ensemble du fagot occupe un encombrement donné. Si ce fagot qui est utilisé avec des membranes organiques répond aux contraintes de mise en oeuvre industrielle (au niveau de sa fabrication), il n'améliore en rien la tenue mécanique des membranes. La distance entre appuis est en effet trop importante dans le cas d'éléments mono ou multicanal mécaniquement fragiles. Dans ce cas des fibres organiques, elles sont souvent renforcées au niveau de leur "pied", à savoir au niveau de la liaison fibre/empotage. Ceci est possible dans la mesure où la fibre organique est en un polymère qui peut être renforcé avec un autre polymère plus tenace ou plus dur, comme par exemple avec un polyuréthane thermoplastique (TPU). Cette solution n'est cependant pas transposable à des éléments filtrants plus fragiles comme la céramique, car il n'existe pas de matériau pouvant remplir la fonction jouée par le TPU comme précédemment. De plus, dans ce système d'assemblage, l'espace entre les éléments filtrants n'est pas déterminé. Cette indétermination est préjudiciable à l'écoulement du fluide à traiter ou déjà traité et limite les performances de l'assemblage en fagot.

Aucun des systèmes d'assemblage de l'art antérieur n'est parfaitement adapté au cas de l'assemblage d'un grand nombre d'éléments de filtration mono ou multicanal mécaniquement fragiles.

Aucun des cas cités ci-dessus n'enseigne ni ne suggère la présente invention adaptée à des éléments mécaniquement fragiles, qui offre une solution pour remédier aux différents inconvénients mentionnés ci-dessus.

L'invention offre un nouveau type d'assemblage d'éléments de filtration, séparation ou de réaction, applicable à tout type d'éléments (mono ou multicanal), notamment ceux mécaniquement fragiles, assemblage dans lequel lesdits éléments sont liés de façon à former une nappe d'éléments.

L'invention fournit donc une nappe d'éléments de filtration, séparation ou réaction, dans laquelle les éléments sont reliés entre eux par des liaisons interéléments, ladite nappe présentant un taux de ramification inférieur ou égal à 4 et comprenant un nombre total d'éléments filtrants N compris entre 10 et 2000 et dans laquelle les liaisons inter-éléments présentent, par rapport à l'axe des éléments, un angle de 30 à 150 degrés.

Selon un mode de réalisation, cette nappe présente les trois nombres adimensionnels suivants :
A : Nombre de liaisons inter-éléments par élément, compris entre 1 et 20, de préférence entre 2 et 5 ;
E : Nombre d'éléments filtrants par liaison inter-éléments, compris entre 2 et 2000, de préférence entre 3 et 700 ;
N : Nombre total d'éléments filtrants, compris de préférence entre 10 et 300.

Selon un mode de réalisation, dans cette nappe les éléments sont reliés directement à au plus 4 autres éléments.

Selon un mode de réalisation, dans cette nappe, les liaisons inter-éléments sont constituées d'unités de liaison reliant les éléments entre eux et reliées à ceux-ci par des attaches.

Selon un mode de réalisation, dans cette nappe, les unités de liaison relient les éléments deux à deux.

Selon un mode de réalisation, dans cette nappe, les liaisons inter-éléments sont linéaires.

Selon un autre mode de réalisation, dans cette nappe, les liaisons inter-éléments sont ramifiées.

Selon un mode de réalisation, dans cette nappe, les liaisons inter-éléments présentent, par rapport à l'axe des éléments, un angle entre 60 et 120 degrés.

Selon un mode de réalisation, dans cette nappe, les liaisons inter-éléments sont en polymère élastomère et/ou thermoplastique.

Selon un mode de réalisation, dans cette nappe, les liaisons inter-éléments sont en ciment céramique.

Selon un mode de réalisation, dans cette nappe, les liaisons inter-éléments sont attachées aux éléments mécaniquement et/ou physico-chimiquement.

Selon un mode de réalisation, dans cette nappe, les unités de liaison et les attachés sont en un même matériau,

Selon un mode de réalisation, dans cette nappe, les éléments sont mono ou multicanal.

Selon un mode de réalisation, dans cette nappe, les éléments sont des fibres céramiques.

Selon un mode de réalisation, cette nappe est rigide.

Selon un autre mode de réalisation, cette nappe est souple.

Selon un mode de réalisation, cette nappe est plane.

L'invention a encore pour objet un procédé de préparation d'une nappe selon l'invention, comprenant les étapes de :
(i) disposer les éléments filtrants sur un support approprié ;
(ii) relier ces éléments avec des liaisons inter-éléments.

Selon un mode de réalisation, dans ce procédé, l'étape (ii) comprend une première sous-étape comprenant l'application d'un précurseur de liaison inter-éléments et une seconde sous-étape comprenant la transformation dudit précurseur en ladite liaison.

L'invention a encore pour objet un procédé de préparation d'une nappe selon l'invention, comprenant les étapes de :
(i) disposer un précurseur de liaison inter-éléments sur un support approprié ;
(ii) disposer les éléments filtrants sur ledit précurseur ;
(iii) relier ces éléments avec des liaisons inter-éléments par transformation dudit précurseur en ladite liaison.

Selon un mode de réalisation, dans ces procédés, la transformation dudit précurseur est effectuée par polymérisation.

L'invention a encore pour objet un module de filtration, séparation ou réaction, comprenant au moins une nappe selon l'invention.

Selon un mode de réalisation, le module comprend deux empotages d'extrémité en époxy tandis que les liaisons inter-éléments sont en polymère élastomère et/ou thermoplastique.

Selon un autre mode de réalisation, le module comprend deux empotages d'extrémité en ciment céramique tandis que les liaisons inter-éléments sont en polymère élastomère et/ou thermoplastique.

Selon encore un autre mode de réalisation, le module comprend deux empotages d'extrémité en ciment céramique tandis que les liaisons inter-éléments sont en ciment céramique.

Selon un mode de réalisation, le module comprend au moins deux nappes superposées.

Selon un mode de réalisation, le module comprend au moins une nappe enroulée.

L'invention a encore pour objet un procédé de préparation d'un module selon l'invention, comprenant les étapes de :
(i) préparation d'au moins deux nappes par le procédé selon l'invention ;
(ii) superposition de celles-ci ; et
(iii) empotage des extrémités.

L'invention a encore pour objet un procédé de préparation d'un module selon l'invention, comprenant les étapes de :
(i) préparation d'au moins deux nappes par le procédé selon l'invention ;
(ii) sur au moins une des nappes application d'un précurseur de liaison inter-éléments et superposition de ladite au moins deuxième nappe ;
(iii) transformation dudit précurseur en liaison inter-éléments ; et
(iv) empotage des extrémités.

L'invention a encore pour objet un procédé de préparation d'un module selon l'invention, comprenant les étapes de :
(i) préparation d'au moins une nappe par le procédé selon l'invention ;
(ii) enroulement de celle(s)-ci sur elle(s)-même(s) ; et
(iii) empotage des extrémités.

L'invention a encore pour objet un procédé de préparation d'un module selon l'invention, comprenant les étapes de :
(i) préparation d'une nappe par le procédé selon l'invention ;
(ii) sur cette nappe application d'un précurseur de liaison inter-éléments ;
(iii) enroulement de celle-ci sur elle-même ;
(iv) transformation dudit précurseur en liaison inter-éléments ; et
(v) empotage des extrémités.

L'invention a encore pour objet un procédé de préparation d'un module selon l'invention, comprenant les étapes de :
(i) préparation d'au moins deux nappe(s) par le procédé selon l'invention ;
(ii) sur au moins une des nappes application d'un précurseur de liaison inter-éléments ;
(iii) enroulement de celles-ci sur elles-mêmes ;
(iv) transformation dudit précurseur en liaison inter-éléments ; et
(v) empotage des extrémités.

L'invention est décrite plus en détail dans la description qui suit et en référence aux dessins dans lesquels :

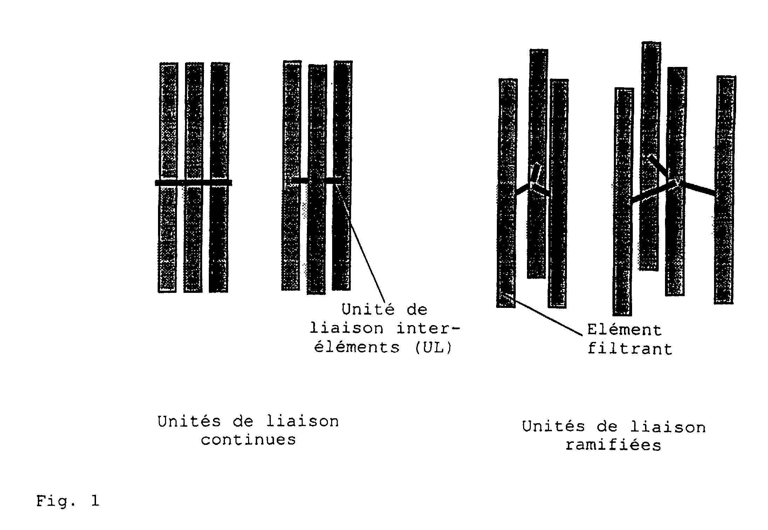

la figure 1 représente un mode de réalisation de l'invention avec des liaisons linéaires et ramifiées.

Dans le cadre de l'invention, la description est donnée en référence à des éléments "filtrants", mais il est clair que ces éléments peuvent être utilisés pour toutes les applications mentionnées ci-dessus en préambule, et que l'invention ne doit en aucun cas être limitée à la seule filtration. L'invention s'applique à tout type d'élément, de filtration, séparation, réaction, mise en contact de deux fluides, etc., comme il a été indiqué plus haut.

### NAPPE

La nappe d'éléments filtrants est mieux caractérisée par trois nombres adimensionnels :
A : Nombre de liaisons inter-éléments par élément filtrant.
E : Nombre d'éléments filtrants par liaison inter-éléments.
N : Nombre total d'éléments filtrants.

L'invention présente un nouveau concept de nappe d'éléments filtrants, formé par les éléments filtrants et par un système de liaisons inter-éléments améliorant la mécanique et présentant de nombreux avantages. Cette liaison inter-éléments permet de relier les éléments filtrants entre eux, ladite liaison consistant en général en une pluralité d'unités de liaison reliées aux éléments par des attaches. Ces unités de liaison relient en général un élément à un autre; il est cependant possible que cette unité relie plusieurs éléments ensemble. Cette combinaison d'éléments filtrants et de leurs liaisons inter-éléments constitue une nouvelle unité appelée "nappe" qui offre de nouvelles possibilités de montage des éléments filtrants. La nappe selon l'invention se caractérise par le fait que les éléments ne sont pas tous reliés ensemble à la même unité de liaison, par rapport au système classique avec entretoise, dans lequel les éléments sont reliés entre eux par une liaison comprenant une unique unité de liaison (qui est constituée de l'entretoise). Par rapport à ce même système avec entretoise, l'invention propose une nappe qui présente un taux de ramification nettement plus faible. Alors que dans une entretoise, chaque élément est relié à tous les autres, dans la nappe les éléments sont en général reliés deux à deux. On peut aussi dire que dans la nappe selon l'invention, le taux de ramification, est relativement faible, comparé à celui pour une entretoise. On peut définir ce taux de ramification comme la valeur moyenne du nombre d'éléments reliés directement à un élément, c'est-à-dire le nombre moyen de voisins de premier ordre de chaque élément. Ainsi, dans le cas d'une entretoise, pour un nombre total d'éléments de 10, on sait que chaque élément est lié directement aux 9 autres. Chaque élément possède alors 9 voisins de premier ordre et le taux de ramification est de 9. Pour la nappe selon l'invention, ce taux est en général inférieur à 4, de préférence inférieur à 3.

Cette nappe présente un effet synergique qui améliore de façon remarquable la résistance mécanique des éléments filtrants dans le montage final (ou module). Cet effet synergique est en partie et notamment lié au nombre de liaisons inter-éléments par élément filtrant, A.

Cette nappe permet de contrôler l'espace entre les éléments filtrants dans le montage final. Par rapport aux systèmes de fagot ou d'entretoises, cet espace contrôlé ainsi créé permet d'améliorer l'écoulement du fluide à traiter ou déjà traité. Cet espacement est en partie et notamment lié à E.

Cette nappe permet aussi de faciliter la mise en place d'une jonction ou empotage au niveau des extrémités des éléments filtrants à l'aide de l'espacement créé.

Comparativement au système d'entretoises et aux autres systèmes de l'art antérieur, ce système de nappe simplifie la mise en oeuvre industrielle, puisqu'il ne s'agit plus de faire glisser les éléments dans les trous des entretoises. De plus, la nappe selon l'invention prévient les phénomènes de résonance qui surviennent classiquement avec les entretoises, les liaisons ainsi créées de la nappe permettant de répartir les vibrations d'un élément aux autres. Les liaisons inter-éléments permettent de repartir les contraintes à la totalité de l'assemblage final dans l'unité finale (par exemple l'unité de filtration). Enfin, l'écoulement du fluide côté perméat est grandement amélioré, puisqu'il n'existe plus de barrière à cet écoulement.

La nappe comprend les éléments filtrants mono ou multicanal réunis par des liaisons inter-éléments. Les liaisons inter-éléments sont réalisées à l'aide d'unités de liaison, liées aux éléments filtrants par des attaches. Le nombre E permet de définir le nombre d'éléments filtrants communs à une même liaison. Ces unités de liaison maintiennent les éléments filtrants par un système d'attache. Le nombre A permet de définir le nombre de liaisons (ou d'attache) portées par un même élément filtrant. La disposition et le nombre des liaisons sur les éléments filtrants, en deux ou trois dimensions, permettent de conférer à l'ensemble de la nappe ces différentes propriétés et notamment de synergie mécanique. Les différentes parties de cette nappe sont décrites ci-dessous.

### LIAISON INTER-ELEMENTS.

La nappe comprend les éléments filtrants unis par les liaisons inter-éléments qui relient deux ou plus éléments entre eux de manière continue ou par ramification (voir la figure 1). Dans le cas de la ramification, un élément est relié directement en général à au plus 4 autres éléments, de préférence au plus 3 autres éléments.

Cette liaison peut ne pas être commune à tous les éléments, mais chaque élément filtrant fait au moins partie d'une liaison inter-éléments.

Le nombre E correspond au nombre d'éléments filtrants liés par la même liaison inter-éléments. Cette valeur n'est pas nécessairement constante d'un élément à l'autre de la nappe (et en général elle est en fait variable). Ce nombre E est en général compris entre 2 et 2000 et plus particulièrement entre 3 et 700.

Les unités de liaison et leurs attaches, formant les liaisons inter-éléments sont disposées de manière à apporter cohésion, synergie et anti-vibration à l'ensemble des éléments dans le module final (à la description duquel on pourra se reporter). Chaque élément filtrant est maintenu par un certain nombre de liaisons inter-éléments, dont les attaches sont distribuées sur sa longueur. Ces différentes liaisons permettent de diminuer les longueurs entre appuis successifs. Ainsi, sous l'effet d'une contrainte, ce système de liaisons permet de réduire la déformation de l'élément filtrant et réduit ainsi les risques de fracture.

Les éléments sont reliés les uns aux autres par les unités de liaison et les attaches, ce qui permet de créer un effet synergique. En effet, une contrainte appliquée à un élément filtrant est retransmise aussi aux éléments filtrants voisins qui sont unis par la même unité liaison, et ainsi de suite. Comme les éléments sont globalement tous unis, cette contrainte est donc retransmise et dissipée à l'ensemble de l'assemblage.

Selon la longueur et la fragilité des éléments filtrants une ou plusieurs attache(s) et unité(s) de liaison est(seront) positionnées par élément. Lorsqu'une contrainte est appliquée au milieu d'un élément filtrant maintenu par ces extrémités, celui-ci fléchit, se déforme. L'amplitude de cette déformation augmente avec la contrainte imposée et au-delà d'une certaine valeur cet élément se casse. A titre d'exemple, dans le cas d'une distance d'appui de 860mm, la cassure d'un élément céramique de 5 mm de diamètre peut être obtenue avec une force de 5 N exercée en son milieu. Dans le cas d'élément fragile, comme par exemple avec des fibres céramiques, il est avantageux de diminuer la distance entre les deux points d'appui, de sorte que la contrainte maximale admissible augmente et globalement l'élément filtrant résistera mieux à une contrainte plus élevée.

L'espacement de ces différentes attaches et unités de liaison sur un même élément filtrant détermine aussi la tenue mécanique de l'ensemble. Ainsi, il est préférable d'avoir un espacement régulier des différentes attaches et unités sur toute la longueur de l'élément filtrant, plutôt qu'un ensemble groupé d'attaches et d'unités sur une partie de cette longueur. L'écartement des attaches et unités permet de réduire la distance des points d'appuis et donc d'augmenter le niveau de contrainte admissible.

Ainsi de manière préférentielle mais non limitative, on utilisera trois liaisons pour unir les éléments filtrants, ces liaisons étant sensiblement équiréparties sur la longueur de l'élément filtrant. A titre d'exemple, dans le cas de fibres céramiques de 850mm de long, les trois unités de liaison et attaches seront placées à 180 mm, 425 mm et 670 mm de l'une des extrémités de la fibre céramique.

Ces liaisons permettent aussi d'éviter la propagation des vibrations. Pour cela les attaches et unités peuvent être positionnées en fonction des points d'appuis favorables de manière à minimiser la propagation des vibrations de l'élément filtrant ainsi qu'au centre de l'élément filtrant.

En fait, le nombre A, nombre de liaisons (unités + attaches) par éléments est relié à la tenue mécanique et anti-vibratoire de l'élément pris individuellement ainsi que de l'ensemble. Plus ce nombre A sera élevé, meilleure sera la tenue mécanique de l'ensemble. Le nombre A est en général compris entre 1 et 20 et plus préférentiellement entre 2 et 5.

Les liaisons inter-éléments (unité et attache) présentent généralement un angle de 30 à 150 degrés par rapport à l'axe de l'élément filtrant et préférentiellement entre 60 et 120 degrés. Cet angle peut être égal à 90°, par exemple lorsque la nappe d'éléments est destinée à être enroulée pour former le module. Dans ce même cas, cet angle peut aussi être différent de 90°c, afin de modifier la compacité du module final.

Ainsi qu'il a été indiqué, les liaisons comprennent des unités de liaison et des attaches.

### Attache

Le système d'attache des unités de liaison aux éléments filtrants peut être réalisé de différentes façons. Cette attache peut être physico-chimique ou mécanique ou une combinaison de ces différents types ou bien cette attache peut correspondre à un positionnement des unités de liaison.

Un exemple d'attache mécanique peut être donné par l'utilisation de clips pour les unités de liaison. La forme des clips est alors adaptée à la forme extérieure des éléments filtrants. Dans ce cas, les unités de liaison peuvent être fixées classiquement sur le matériau constitutif du clips. L'utilisation de clips permet de positionner les éléments filtrants et de réaliser une nappe à deux ou trois dimensions. Un autre exemple peut être donné par l'utilisation d'un matériau qui pénètre dans la porosité de l'élément filtrant. Dans ce dernier cas un ou deux matériaux peuvent être utilisés ; le premier assurant "l'accroche" au niveau des éléments filtrant et le même matériau ou un autre matériau assurant l'unité de liaison.

Dans le cas d'attaches physico-chimiques, les unités de liaison sont positionnées par collage, soudage ou frittage du matériau constituant les unités de liaison aux éléments filtrants. Par exemple, il est possible de coller les unités de liaison avec des éléments filtrants en céramique à l'aide d'une résine de type époxy.

### Unité de liaison.

Tout type de matériaux polymères, chargés ou non, ou de mélange de matériaux polymères de type par exemple élastomère, thermoplastique ou thermodurcissable est approprié. Ce matériau peut aussi être un composé métallique, céramique, organo-minéral ou un matériau composite.

A titre d'exemple et de façon non exhaustive on citera les polymères suivants : EPDM, EPR, silicone fluoré, poly(méth)acrylate, polymère fluorocarboné, polyphosphazène, polyvinyl- ou phényl-silicone, polyoléfines telles que polypropylène ou polyéthylène.

Tout autre matériau, rigide ou élastique, compatible avec les matériaux et fluides en présence peut cependant être utilisé.

### Elément de filtration, séparation ou réaction

Un élément filtrant mono ou multicanal peut tout d'abord être un élément de forme allongé qui présente une géométrie telle que sa section perpendiculairement à l'axe du ou des canaux est constante ou variable. La forme de cette section est de forme circulaire, polygonale (par exemple hexagonale) ou quelconque (par exemple en forme d'étoile ou multilobée). Cette section présente un ou des trous qui sont eux aussi de forme circulaire, polygonale ou quelconque. Dans le cas le plus simple, cet élément est profilé et correspond à un élément cylindrique monocanal de profil circulaire et percé d'un seul trou circulaire, c'est-à-dire à un tube droit. Un élément préféré est une fibre.

L'élément filtrant peut être composé d'une céramique frittée, d'un métal fritté, de carbone poreux, d'un matériau composite, de composé organo-minérale ou organique. Le matériau constitutif peut être poreux ou dense. Nous pouvons citer les cas suivants :
- Eléments monolithes poreux, un exemple peut en être donné par les fibres poreuses filtrantes.
- Eléments à structure poreuse asymétrique, par exemple des éléments comprenant un empilement de couches à porosité variable. Un autre exemple peut être donné par des éléments à porosité variant radialement tel que ceux réalisés par des procédés de centrifugation.
- Eléments combinant des parties poreuses et des parties denses. Un exemple peut en être donné par des supports poreux contenant des couches denses internes ou externes.
- Eléments denses tels que par exemple ceux utilisés pour la fabrication des piles à combustible ou des séparateurs à oxygène.

### PROCEDE DE PREPARATION DES NAPPES

Le procédé comprend tout d'abord le positionnement des éléments sur un support approprié. Un exemple peut en être donné avec des courroies crantées ou des filets. Dans ce cas les éléments filtrants peuvent être positionnés dans les encoches d'une bande de type courroie crantée ou dans les espaces d'un filet.

Dans une seconde étape, on procède à la mise en place des liaisons inter-éléments. On peut par exemple appliquer un précurseur de polymère qui est ensuite polymérisé, formant ainsi l'unité de liaison attachée par une attache physico-chimique.

### MODULE

Un des intérêts majeurs de l'invention réside dans les possibilités d'utilisation de ces assemblages d'éléments filtrants ou nappes. En effet, ces nappes vont être montées en unité, notamment de filtration. Pour cela, ces nappes pourront être utilisées telles quelles, notamment dans le cas de nappes tridimensionnelles (avec un taux de ramification par exemple de 4), ou être enroulées ou superposées dans le cas de nappes planes. Les nappes enroulées ou superposées peuvent être telles que les éléments sont parallèles entre eux ou non ; par exemple dans le cas d'une nappe enroulée, les éléments filtrants peuvent être parallèles entre eux ou au contraire être "en torsade".

La nappe selon l'invention peut être rigide ou souple, selon le module final à préparer.

Des résultats intéressants peuvent être obtenus pour des modules comprenant:
- deux empotages d'extrémité en époxy et des liaisons inter-éléments sont en polymère élastomère et/ou thermoplastique, pour des applications à la température ambiante.
- deux empotages d'extrémité en ciment céramique et des liaisons inter-éléments sont en polymère élastomère et/ou thermoplastique, pour des applications à une température d'environ 250°C maximum.
- deux empotages d'extrémité en ciment céramique et des liaisons inter-éléments sont en ciment céramique, pour des applications à une température jusqu'à environ 500°C

L'espacement final des éléments filtrants dans l'unité de filtration est contrôlé par l'espacement au niveau de la nappe. Par exemple une nappe plane peut être réalisée avec des écarts judicieusement choisis. L'enroulement de cette nappe permet d'aligner automatiquement les éléments filtrants en spirale compacte ou même en empilement hexagonal ou triangulaire. Dans le cas d'une ou plusieurs nappes enroulées, les liaisons peuvent ne pas être perpendiculaires aux éléments. Le fait d'enrouler les nappes va alors décaler les liaisons qui de ce fait occuperont un espace plus restreint dans le module final. Une telle disposition est aussi utile pour améliorer l'écoulement côté perméat.

De même, plusieurs nappes planes peuvent être superposées les unes sur les autres afin d'obtenir un assemblage tridimensionnel. L'espacement des éléments filtrants permet alors un empilement en quinconce ou une superposition des éléments filtrants. De la même façon que ci-dessus, il peut être avantageux d'utiliser des nappes dont les liaisons sont décalées d'une nappe à 1 autre.

### PROCEDE DE PREPARATION DES MODULES

Le module selon l'invention peut être préparé selon de nombreuses variantes.

Dans le cas des modules comprenant des nappes superposées, ce procédé peut comprendre la simple superposition de ces nappes et l' "empotage" des extrémités. Ce procédé peut aussi comprendre l'étape intermédiaire ou préliminaire d'application d'un précurseur de liaison inter-éléments entre les nappes et transformation en liaison inter-éléments. Cette transformation se fait notamment par polymérisation, en particulier par polymérisation à chaud.

Dans le cas des modules comprenant des nappes enroulées, ce procédé peut comprendre le simple enroulement sur elle(s)-même(s) de la ou des nappes et l'"empotage" des extrémités. Ce procédé peut aussi comprendre l'étape intermédiaire d'application d'un précurseur de liaison inter-éléments, soit sur une nappe unique soit entre des nappes et transformation en liaison inter-éléments.

L'invention n'est pas limitée aux modes de réalisation décrits mais est susceptible de nombreuses variantes aisément accessibles à l'homme de l'art.

## Revendications

1. Nappe d'éléments de filtration, séparation ou réaction, dans laquelle les éléments sont reliés entre eux par des liaisons inter-éléments, ladite nappe présentant un taux de ramification inférieur ou égal à 4 et comprenant un nombre total d'éléments filtrants N compris entre 10 et 2000, et dans laquelle les liaisons inter-éléments présentent, par rapport à l'axe des éléments, un angle de 30 à 150 degrés.

2. Nappe d'éléments selon la revendication 1, présentant les trois nombres adimensionnels suivants :
A : Nombre de liaisons inter-éléments par élément, compris entre 1 et 20 ;
E : Nombre d'éléments filtrants par liaison inter-éléments, compris entre 2 et 2000 .

3. Nappe d'éléments selon la revendication 2, dans laquelle :
A : compris entre 2 et 5 ;
E : compris entre 3 et 700 ;
N : compris entre 10 et 300.

4. Nappe d'éléments selon l'une quelconque des revendications 1 à 3, dans laquelle les éléments sont reliés directement à au plus 4 autres élémehts.

5. Nappe d'éléments selon l'une quelconque des revendications 1 à 4, dans laquelle les liaisons inter-éléments sont constituées d'unités de liaison reliant les éléments entre eux et reliées à ceux-ci par des attaches.

6. Nappe d'éléments selon l'une quelconque des revendications 1 à 5, dans laquelle les unités de liaison relient les éléments deux à deux.

7. Nappe d'éléments selon l'une quelconque des revendications 1 à 6, dans laquelle les liaisons inter-éléments sont linéaires.

8. Nappe d'éléments selon l'une quelconque des revendications 1 à 6, dans laquelle les liaisons inter-éléments sont ramifiées.

9. Nappe d'éléments selon l'une quelconque des revendications 1 à 8, dans laquelle les liaisons inter-éléments présentent, par rapport à i'axe des éléments, un angle entre 60 et 120 degrés.

10. Nappe d'éléments selon l'une quelconque des revendications 1 à 9, dans laquelle les liaisons inter-éléments sont en polynère élastomère et/ou thermoplastique.

11. Nappe d'éléments selon l'une quelconque des revendications 1 à 9, dans laquelle les liaisons inter-éléments sont en ciment céramique.

12. Nappe d'éléments selon l'une quelconque des revendications 1 à 11, dans laquelle les liaisons inter-éléments sont attachées aux éléments mécaniquement et/ou physico-chimiquement.

13. Nappe d'éléments selon la revendication 5, dans laquelle les unités de liaison et les attaches sont en un même matériau.

14. Nappe d'éléments selon l'une quelconque des revendications 1 à 13, dans laquelle les éléments sont mono ou multicanal.

15. Nappe d'éléments selon l'une quelconque des revendications 1 à 14, dans laquelle les éléments sont des fibres céramiques.

16. Nappe d'éléments selon l'une quelconque des revendications 1 à 15, qui est rigide.

17. Nappe d'éléments selon l'une quelconque des revendications 1 à 15, qui est souple.

18. Nappe d'éléments selon l'une quelconque des revendications 1 à 17, qui est plane.

19. Procédé de préparation d'une nappe selon l'une quelconque des revendications 1 à 18, comprenant les étapes de :
(i) disposer les éléments filtrants sur un support approprié ;
(ii) relier ces éléments avec des liaisons inter-éléments.

20. Procédé selon la revendication 19, dans lequel l'étape (ii) comprend une première sous-étape comprenant l'application d'un précurseur de liaison inter-éléments et une seconde sous-étape comprenant la transformation dudit précurseur en ladite liaison.

21. Procédé de préparation d'une nappe selon l'une quelconque des revendications 1 à 18, comprenant les étapes de :
(i) disposer un précurseur de liaison inter-éléments sur un support approprié ;
(ii) disposer les éléments filtrants sur ledit précurseur ;
(iii) relier ces éléments avec des liaisons inter-éléments par transformation audit précurseur en ladite liaison.

22. Procédé selon la revendication 20 ou 21, dans lequel la transformation dudit précurseur est effectuée par polymérisation.

23. Module de filtration, séparation ou réaction, comprenant au moins une nappe selon l'une quelconque des revendications 1 à 18.

24. Module selon la revendication 23, comprenant deux pottings d'extrémité en époxy tandis que les liaisons inter-éléments sont en polymère élastomère et/ou thermoplastique.

25. Module selon la revendication 23, comprenant deux pottings d'extrémité en ciment céramique tandis que les liaisons inter-éléments sont en polymère élastomère et/ou thermoplastique.

26. Module selon la revendication 23, comprenant deux pottings d'extrémité en ciment céramique tandis que les liaisons inter-éléments sont en ciment céramique.

27. Module selon l'une quelconque des revendications 23 à 26, comprenant au moins deux nappes superposées.

28. Module selon l'une quelconque des revendications 23 à 26, comprenant au moins une nappe enroulée.

29. Procédé de préparation d'un module selon la revendication 27, comprenant les étapes de :
(i) préparation d'au moins deux nappes par le procédé selon l'une quelconque des revendications 19 à 22 ;
(ii) superposition de celles-ci ; et
(iii) potting des extrémités.

30. Procédé de préparation d'un module selon la revendication 27, comprenant les étapes de :
(i) préparation d'au moins deux nappes par le procédé selon l'une quelconque des revendications 19 à 22 ;
(ii) sur au moins une des nappes application d'un précurseur de liaison inter-éléments et superposition de ladite au moins deuxième nappe ;
(iii) transformation dudit précurseur en liaison inter-éléments ; et
(iv) potting des extrémités.

31. Procédé de préparation d'un module selon la revendication 28, comprenant les étapes de :
(i) préparation d'au moins une nappe par le procédé selon l'une quelconque des revendications 19 à 22 ;
(ii) enroulement de celle(s)-ci sur elle(s)-même(s) ; et
(iii) potting des extrémités.

32. Procédé de préparation d'un module selon la revendication 28, comprenant les étapes de :
(i) préparation d'une nappe par le procédé selon l'une quelconque des revendications 19 à 22 ;
(ii) sur cette nappe application d'un précurseur de liaison inter-éléments ;
(iii) enroulement de celle-ci sur elle-même ;
(iv) transformation dudit précurseur en liaison inter-éléments ; et
(v) potting des extrémités.

33. Procédé de préparation d'un module selon la revendication 28, comprenant les étapes de :
(i) préparation d'au moins deux nappe(s) par le procédé selon l'une quelconque de revendications 19 à 22 ;
(ii) sur au moins une des nappes application d'un précurseur de liaison inter-éléments ;
(iii) enroulement de celles-ci sur elles-mêmes ;
(iv) transformation dudit précurseur en liaison inter-éléments ; et
(v) potting des extrémités.

## Claims

1. A sheet of elements for filtration, separation or reaction, in which the elements are joined together by inter-element linkages said sheet having a branching factor of less than or equal to 4 and comprising a total number of filtering elements N comprised between 10 and 2000, and in which the inter-element linkages make, with respect to the axis of the elements, an angle of 30 to 150°.

2. The sheet of elements according to claim 1, exhibiting the three following dimensionless numbers:
A: Number of inter-element linkages per filtering element comprised between 1 and 20,
E:. Number of filtering elements per inter-element linkage comprised between 2 and 2000.

3. The sheet of elements according to claim 2, in which:
A is comprised between 2 and 5;
E is comprised between 3 and 700;
N is comprised between 10 and 300.

4. The sheet of elements according to any one of claims 1 to 3, in which the elements are directly linked to 4 other elements at the most.

5. The sheet of elements according to any one of claims 1 to 4, in which the inter-element linkages are constituted by linking units joining the elements together and connected to the latter by fastening means.

6. The sheet of elements according to any one of claims 1 to 5, in which the linking units connect the elements pairwise.

7. The sheet of elements according to any one of claims 1 to 6, in which said inter-element linkages are linear.

8. The sheet of elements according to any one of claims 1 to 6, in which the inter-element linkages are branched.

9. The sheet of elements according to any one of claims 1 to 8, in which the inter-element linkages make, with respect to the axis of the elements, an angle between 60 and 120°.

10. The sheet of elements according to any one of claims 1 to 9, in which the inter-element linkages are in elastomer and/or thermoplastic polymer.

11. The sheet of elements according to any one of claims 1 to 9, in which the inter-element linkages are in ceramic cement.

12. The sheet of elements according to any one of claims 1 to 11, in which the inter-element linkages are attached to said elements by mechanical and/or physicochemical means.

13. The sheet of elements according to any one of claims 1 to 12, in which the inter-element linkages and the fasting means are made of the same material.

14. The sheet of elements according to any one of claims 1 to 13, in which said elements are single- or multi-channel elements.

15. The sheet of elements according to any one of claims 1 to 14, in which said elements are ceramic fibers.

16. The sheet of elements according to any one of claims 1 to 15, wherein said sheet is rigid.

17. The sheet of elements according to any one of claims 1 to 15, wherein said sheet is flexible.

18. The sheet of elements according to any one of claim 1 to 17, wherein said sheet is flat.

19. A method for preparing a sheet according to any one of claims 1 to 18, comprising the steps of:
(i) placing the filtering elements on a suitable support;
(ii) linking said elements by means of inter-element linkages.

20. The method according to claim 19, in which step (ii) comprises a first sub-step comprising applying an inter-element linkage precursor and a second sub-step comprising transforming said precursor into said linkage.

21. The method for preparing a sheet according to any one of claims 1 to 18, comprising the steps of:
(i) arranging an inter-element linkage precursor on a suitable support;
(ii) arranging the filtering elements on the precursor;
(iii) connecting said elements to said inter-element linkages by transforming said precursor into said linkage.

22. The method according to claim 20 or 21, in which the transformation of said precursor is carried out by polymerization.

23. A filtration, separation or reaction module comprising at least one sheet according to any one of claims 1 to 18.

24. The module according to claim 23, comprising two end pottings in epoxy, with said inter-element linkages being in elastomer and/or thermoplastic polymer.

25. The module according to claim 23, comprising two end pottings in ceramic cement with inter-element linkages in elastomer and/or thermoplastic polymer.

26. The module according to claim 23, comprising two end pottings in ceramic cement, with the inter-element linkages in ceramic cement.

27. The module according to any one of claims 23 to 26, comprising at least two sheets placed one above the other.

28. the module according to any one of claims 23 to 26, comprising at least one wound sheet.

29. A method for preparing a module according to claim 27, comprising the steps of:
(i) preparing at least two sheets by the method according to any one of claims 19 to 22;
(ii) placing these sheets one above the other; and
(iii) potting the ends thereof.

30. The method for preparing a module according to claim 27, comprising the steps of:
(i) preparing at least two sheets by a method according to any one of claims 19 to 22;
(ii) applying, to at least one of said sheets, an inter-element linkage precursor and placing said at least one second sheet thereover;
(iii) transforming said precursor into an inter-element linkage; and
(iv) potting the ends thereof.

31. The method for preparing a module according to claim 28, comprising the steps of:
(i) preparing at least one sheet by the method according to any one of claims 19 to 22;
(ii) winding said sheet or sheets about itself or themselves; and
(iii) potting the ends thereof.

32. The method for preparing a module according to claim 28, comprising the steps of:
(i) preparing a sheet by the method according to any one of claims 19 to 22;
(ii) applying an inter-element linkage precursor to the sheet;
(iii) winding said sheet about itself;
(iv) transforming said precursor into an inter-element linkage; and
(v) potting the ends thereof.

33. The method for preparing a module according to claim 28, comprising the steps of:
(i) preparing at least two sheets by the method according to any one of claims 19 to 22;
(ii) applying, to at least one of said sheets, an inter-element linkage precursor;
(iii) winding said sheets about themselves;
(iv) transforming the precursor into an inter-element linkage; and
(v) potting the ends thereof.

## Patentansprüche

1. Matte aus Filter-, Trenn- oder Reaktionselementen, bei der die Elemente durch Zwischenelementverbindungen miteinander verbunden sind, wobei die Matte einen Verzweigungsgrad von 4 oder weniger aufweist und eine zwischen 10 und 2000 liegende Gesamtanzahl N von Filterelementen umfasst, und bei der die Zwischenelementverbindungen bezüglich der Achse der Elemente einen Winkel von 30 bis 150 Grad bilden.

2. Elementmatte nach Anspruch 1, mit folgenden drei dimensionslosen Zahlen:
A: Anzahl von Zwischenelementverbindungen pro Element, zwischen 1 und 20 liegend;
E: Anzahl von Filterelementen pro Zwischenelementverbindung, zwischen 2 und 2000 liegend;
N: Gesamtanzahl von Filterelementen.

3. Elementmatte nach Anspruch 2, bei der
A zwischen 2 und 5 liegt;
E zwischen 3 und 700 liegt;
N zwischen 10 und 300 liegt.

4. Elementmatte nach einem der Ansprüche 1 bis 3, bei der die Elemente mit höchstens vier anderen Elementen unmittelbar verbunden sind.

5. Elementmatte nach einem der Ansprüche 1 bis 4, bei der die Zwischenelementverbindungen aus Verbindungseinheiten bestehen, die die Elemente untereinander verbinden und mit diesen durch Anschlüsse verbunden sind.

6. Elementmatte nach einem der Ansprüche 1 bis 5, bei der die Verbindungseinheiten die Elemente paarweise miteinander verbinden.

7. Elementmatte nach einem der Ansprüche 1 bis 6, bei der die Zwischenelementverbindungen linear sind.

8. Elementmatte nach einem der Ansprüche 1 bis 6, bei der die Zwischenelementverbindungen verzweigt sind.

9. Elementmatte nach einem der Ansprüche 1 bis 8, bei der die Zwischenelementverbindungen bezüglich der Achse der Elemente einen Winkel zwischen 60 und 120 Grad aufweisen.

10. Elementmatte nach einem der Ansprüche 1 bis 9, bei der die Zwischenelementverbindungen aus einem elastomeren und/oder thermoplastischen Polymer bestehen.

11. Elementmatte nach einem der Ansprüche 1 bis 9, bei der die Zwischenelementverbindungen aus Keramikzement bestehen.

12. Elementmatte nach einem der Ansprüche 1 bis 11, bei der die Zwischenelementverbindungen mechanisch und/oder physikalisch-chemisch an den Elementen angeschlossen sind.

13. Elementmatte nach Anspruch 5, bei der die Verbindungseinheiten und die Anschlüsse aus gleichem Material bestehen.

14. Elementmatte nach einem der Ansprüche 1 bis 13, bei der die Elemente ein- oder mehrkanalig sind.

15. Elementmatte nach einem der Ansprüche 1 bis 14, bei der die Elemente Keramikfasern sind.

16. Elementmatte nach einem der Ansprüche 1 bis 15, die starr ist.

17. Elementmatte nach einem der Ansprüche 1 bis 15, die biegsam ist.

18. Elementmatte nach einem der Ansprüche 1 bis 17, die eben ist.

19. Verfahren zur Herstellung einer Matte nach einem der Ansprüche 1 bis 18, mit folgenden Schritten:
(i) die Filterelemente werden auf einem geeigneten Träger angeordnet;
(ii) diese Elemente werden mittels Zwischenelementverbindungen miteinander verbunden.

20. Verfahren nach Anspruch 19, bei dem der Schritt (ii) einen ersten Unterschritt, der das Aufbringen eines Vorläufers der Zwischenelementverbindung umfasst, und einen zweiten Unterschritt, der die Umwandlung des Vorläufers in die genannte Verbindung umfasst, aufweist.

21. Verfahren zur Herstellung einer Matte nach einem der Ansprüche 1 bis 18, mit folgenden Schritten:
(i) ein Vorläufer einer Zwischenelementverbindung wird auf einem geeigneten Träger angeordnet;
(ii) die Filterelemente werden auf dem Vorläufer angeordnet;
(iii) diese Elemente werden mittels Zwischenelementverbindungen miteinander verbunden, indem der Vorläufer in die genannte Verbindung umgewandelt wird.

22. Verfahren nach Anspruch 20 oder 21, bei dem die Umwandlung des Vorläufers durch Polymerisation erfolgt.

23. Filter-, Trenn- oder Reaktionsmodul, das wenigstens eine Matte nach einem der Ansprüche 1 bis 18 aufweist.

24. Modul nach Anspruch 23, mit zwei Endpottings aus Epoxydharz, während die Zwischenelementverbindungen aus elastomerem und/oder thermoplastischem Polymer bestehen.

25. Modul nach Anspruch 23, mit zwei Endpottings aus Keramikzement, während die Zwischenelementverbindungen aus elastomerem und/oder thermoplastischem Polymer bestehen.

26. Modul nach Anspruch 23, mit zwei Endpottings aus Keramikzement, während die Zwischenelementverbindungen aus Keramikzement bestehen.

27. Modul nach einem der Ansprüche 23 bis 26, mit wenigstens zwei übereinander angeordneten Matten.

28. Modul nach einem der Ansprüche 23 bis 26, mit wenigstens einer eingerollten Matte.

29. Verfahren zur Herstellung eines Moduls nach Anspruch 27, mit folgenden Schritten:
(i) Herstellung wenigstens zweier Matten mittels des Verfahrens nach einem der Ansprüche 19 bis 22;
(ii) Überlagerung der Matten; und
(iii) Potting-Bearbeitung der Enden.

30. Verfahren zur Herstellung eines Moduls nach Anspruch 27, mit folgenden Schritten:
(i) mittels des Verfahrens nach einem der Ansprüche 19 bis 22 werden wenigstens zwei Matten hergestellt;
(ii) auf wenigstens einer der Matten wird ein Vorläufer einer Zwischenelementverbindung aufgebracht und die wenigstens eine zweite Matte darübergelegt;
(iii) der Vorläufer wird in eine Zwischenelementverbindung umgewandelt; und
(iv) die Enden werden im Pottingverfahren bearbeitet.

31. Verfahren zur Herstellung eines Moduls nach Anspruch 28, mit folgenden Schritten:
(i) mittels des Verfahrens nach einem der Ansprüche 19 bis 22 wird wenigstens eine Matte hergestellt;
(ii) diese wird (werden) in sich zusammengerollt; und
(iii) die Enden werden im Pottingverfahren bearbeitet.

32. Verfahren zur Herstellung eines Moduls nach Anspruch 28, mit folgenden Schritten:
(i) mittels des Verfahrens nach einem der Ansprüche 19 bis 22 wird eine Matte hergestellt;
(ii) auf der Matte wird ein Vorläufer einer Zwischenelementverbindung aufgebracht;
(iii) die Matte wird in sich zusammengerollt;
(iv) der Vorläufer wird in eine Zwischenelementverbindung umgewandelt; und
(v) die Enden werden im Pottingverfahren bearbeitet.

33. Verfahren zur Herstellung eines Moduls nach Anspruch 28, mit folgenden Schritten:
(i) mittels des Verfahrens nach einem der Ansprüche 19 bis 22 werden wenigstens zwei Matten hergestellt;
(ii) auf wenigstens einer der Matten wird ein Vorläufer einer Zwischenelementverbindung aufgebracht;
(iii) die Matten werden in sich zusammengerollt;
(iv) der Vorläufer wird in eine Zwischenelementverbindung umgewandelt; und
(iv) die Enden werden im Pottingverfahren bearbeitet.
